# EUROPÄISCHE PATENTANMELDUNG

(11) **EP 1 729 162 A1**
(43) Veröffentlichungstag der Anmeldung: **06.12.2006**
(21) Anmeldenummer: 06010922.0
(22) Anmeldetag: 26.05.2006
(51) Int. Cl.: G02B 21/36

(54) **Mikroskopsystem und Bildgebungsverfahren**

(30) Priorität: 31.05.2005 DE 102005024867
(71) Anmelder: Leica Microsystems CMS GmbH, 35578 Wetzlar (DE)
(72) Erfinder: Ganser, Michael, 35398 Giessen (DE)
(74) Vertreter: Grunert, Marcus

(57) **Zusammenfassung**

Die Erfindung betrifft ein Mikroskopsystem und ein Bildgebungsverfahren unter Verwendung eines Mikroskops (2), das ein oder mehrere Einstellelemente (6) zur Veränderung mindestens einer Mikroskopeinstellung aufweist, und einer Kamera (1) zur Aufnahme eines Mikroskopbildes, die in vorgebbaren Bildmodi betreibbar ist. Es wird vorgeschlagen, mindenstens eines der Einstellelemente (6) des Mikroskops (2) mit der Kamera (1) derart in Wirkverbindung zu setzen, dass abhängig von einer Veränderung der Mikroskopeinstellung ein bestimmter Bildmodus der Kamera (1) einstellbar ist. Alternativ oder zusätzlich kann abhängig von einem vorhandenen Bildmodus der Kamera (1) eine Mikroskopeinstellung verändert werden. Dies ermöglicht die Wahl des jeweils besten Bildmodus der Kamera (1) abhängig von der Art und Weise der mikroskopischen Untersuchung.

## Beschreibung

Die vorliegende Erfindung betrifft ein Mikroskopsystem mit einem Mikroskop, das ein oder mehrere Einstellelemente zur Veränderung mindestens einer Mikroskopeinstellung aufweist, und mit einer Kamera zur Aufnahme eines Mikroskopbildes, die in vorgebbaren Bildmodi betreibbar ist. Weiterhin betrifft die Erfindung ein Verfahren zur Bildgebung mit einem Mikroskop, das mindestens eine verstellbare Mikroskopeinstellung aufweist, und mit einer Kamera, die in vorgebbaren Bildmodi betreibbar ist, sowie weiterhin ein Computerprogramm und ein Computerprogrammprodukt.

Derartige Mikroskopsysteme, die mit analogen Videokameras oder modernen Digitalkameras arbeiten, sowie entsprechende Bildgebungsverfahren sind aus dem Stand der Technik bekannt. Verwendung finden sie zur Darstellung hochaufgelöster Mikroskopbilder oder zur Darstellung beispielsweise biologischer Vorgänge in Echtzeit oder zur Beobachtung von Manipulationen bei verschiedenen Probenarten. Analoge Videokameras waren und sind zwar grundsätzlich in der Lage, ein Bewegtbild zu erzeugen (meistens im Standard von 25 oder 30 Bildern pro Sekunde), jedoch ist ihre Auflösung begrenzt (meist im Standard von 640x480 Pixel). Analoge Videokameras sind folglich für anspruchsvolle Aufgaben oder für Dokumentationszwecke nicht geeignet. Ebensowenig sind sie für sehr lichtschwache Objekte (z. B. bei Fluoreszenzuntersuchungen) geeignet, da die vorgegebene Bildrate keine langen Belichtungszeiten erlaubt.

Moderne Digitalkameras für die Mikroskopie erzeugen hingegen Bilder guter Qualität und Auflösung und erlauben zudem große Belichtungszeiten. Mit solchen Kameras kann jedoch nicht ohne weiteres interaktiv am Mikroskop gearbeitet werden. Bei einem interaktiven Arbeiten am Mikroskop wird häufig ein bestimmter Objektpunkt gesucht, auf diesen fokussiert und anschließend eventuell Manipulationen oder Untersuchungen vorgenommen. Die großen Datenmengen pro Bild führen beim Auslesen aus dem Sensor als auch bei der Übertragung an den Verarbeitungsrechner oder den Bildschirm zu spürbaren Verzögerungen im Bereich 1/10 Sekunde bis mehrere Sekunden.

Die meisten dieser Digitalkameras besitzen eine Vielzahl von Einstellmöglichkeiten, die das Arbeiten in verschiedenen Bildmodi erlauben: Beispielsweise muß für ein gutes Bild von lichtschwachen Objekten die Belichtungszeit auf mehrere Sekunden erhöht werden. Hierdurch wird die Bildrate entsprechend limitiert. Es kann auch die Belichtungszeit verkürzt und die interne Verstärkung der Kamera entsprechend erhöht werden. Hierdurch ergibt sich aber ein verrauschtes, wenig ansprechendes Bild, das zu Navigationszwecken (Detailsuche), jedoch nicht für Dokumentationszwekke zu gebrauchen ist. Eine weitere Möglichkeit besteht in der Wahl verschiedener Bildverarbeitungsmodi. Beispielsweise können beim Auslesen der Bilder Pixelgruppen zusammengefasst werden (sogenanntes "Binnig", z. B. 2x2, 3x3, ... Pixelgruppen). Beim sogenannten "Subsampling" wird nur jedes zweite oder dritte Pixel ausgelesen. Dadurch entstehen Bilder geringerer Detailtreue, die aber mit höherer Bildrate zur Verfügung stehen. Es können auch die interne Verstärkung der Kamera und die beschriebenen Bildverarbeitungsmodi miteinander kombiniert werden.

Damit auch während des Verschiebens von Objekten ("Navigation") diese möglichst scharf erscheinen, muss die Belichtungszeit auf etwa ein bis zwei Millisekunden verkürzt werden (unabhängig von der Bildwechselrate). Damit ergibt sich auch bei nicht lichtschwachen Objekten eine Situation, wie sie bereits oben beschrieben wurde. Für brauchbare Bilder muss die interne Verstärkung erhöht werden, wodurch jedoch das Bildrauschen zunimmt.

Schließlich haben im allgemeinen die in verschiedenen Bildmodi der Kamera erzeugten Bilder unterschiedliche Größe (insbesondere bei unterschiedlicher Auflösung der Bildmodi) und häufig unterschiedliche Helligkeit und Farbe. Für den Bildschirmbetrachter stellt dies keine komfortable Lösung dar.

Aufgabe vorliegender Erfindung ist daher, ein Mikroskopsystem und ein Bildgebungsverfahren vorzuschlagen, mit dem eine benutzerfreundliche, automatisierbare und komfortable Bildgebung in der Videomikroskopie, also bei Verwendung eines Mikroskops und einer Kamera, möglich ist.

Diese Aufgabe wird erfindungsgemäß durch die Merkmale eines Mikroskopsystems gemäß Anspruch 1 sowie eines Verfahrens zur Bildgebung gemäß Anspruch 9 gelöst. Vorteilhafte Ausgestaltungen ergeben sich aus den jeweiligen Unteransprüchen und der nachfolgenden Beschreibung.

Ein erfindungsgemäßes Mikroskopsystem mit einem Mikroskop, das ein oder mehrere Einstellelemente zur Veränderung mindestens einer Mikroskopeinstellung aufweist, und mit einer Kamera zur Aufnahme eines Mikroskopbildes, die in vorgebbaren Bildmodi betreibbar ist, ist dadurch gekennzeichnet, dass mindestens eines der Einstellelemente des Mikroskops mit der Kamera derart in Wirkverbindung steht, dass abhängig von einer Veränderung, also der Bewegung oder Ruhe eines Einstellelements ein bestimmter Bildmodus der Kamera einstellbar ist.

Verschiedene bekannte Mikroskopeinstellungen umfassen dabei die Position eines Mikroskoptisches, die Position oder Wahl eines Mikroskopobjektives, die Stellung einer oder mehrerer Blenden im Beleuchtungs- und/oder im Abbildungsstrahlengang sowie die Beleuchtungsstärke eines Objekts. Die genannten Parameter sind bei den meisten Mikroskopen per Hand oder motorisch verstellbar. Beispielsweise lässt sich die Position des Mikroskoptisches in seiner (x-y-)Ebene verändern, um beispielsweise bei der Suche nach Details über das Objekt zu navigieren. Zum Fokussieren kann entweder die Position des Mikroskoptisches in z-Richtung verändert werden oder diejenige des Mikroskopobjektivs. Je nach Objekt und gewünschter Vergrößerung und Auflösung wird ein bestimmtes Mikroskopobjektiv gewählt. Die Wahl von Blenden im Beleuchtungs- oder im Abbildungsstrahlengang beeinflusst optische Abbildungseigenschaften des Mikroskops, wie Auflösung, Schärfentiefe und Lichtstärke. Schließlich kann über die Beleuchtungsstärke eines Objekts auch die Beleuchtungsstärke in der Bildebene geregelt werden.

Zur Veränderung der genannten Mikroskopeinstellungen sind entsprechende Einstellelemente am Mikroskop vorgesehen, die von Hand oder motorisch bedient bzw. angesteuert werden können. Erfindungsgemäß ist es nun vorgesehen, dass zumindest eines dieser Einstellelemente mit der Kamera derart in der Wirkverbindung steht, dass abhängig von einer Veränderung des Einstellelements und somit einer Veränderung der Mikroskopeinstellung ein bestimmter Bildmodus der Kamera eingestellt wird. Während bisher während einer mikroskopischen Untersuchung jeweils ein optimaler Bildmodus an der Kamera einzustellen war, ist es nunmehr durch vorliegende Erfindung möglich, abhängig von der gewählten Mikroskopeinstellung automatisch einen bestimmten oder den optimalen Bildmodus der Kamera einzustellen. Die Erfindung lässt sich bei analogen wie auch bei digitalen Kameras realisieren. Bei Digitalkameras sind mehr Bildmodi realisierbar.

Alternativ oder zusätzlich kann bei vorliegender Erfindung abhängig vom vorhandenen Bildmodus der Kamera ein Einstellelement des Mikroskops verändert werden. In diesem Fall ist die genannte Wirkverbindung zwischen dem mindestens einen Einstellelement des Mikroskops und der Kamera bidirektional ausgestaltet. In der geschilderten alternativen Variante der Erfindung ist es also beispielsweise möglich, einen gewünschten Bildmodus an der Kamera einzustellen, woraufhin eine entsprechende, insbesondere möglichst optimale Mikroskopeinstellung durch Veränderung der entsprechenden Einstellelemente vorgenommen wird. Wird die genannte Variante der Erfindung zusätzlich eingesetzt, ist es beispielsweise möglich, nach Einstellung eines bestimmten Bildmodus der Kamera (nach einer Veränderung von Einstellelementen des Mikroskops) wiederum bestimmte Einstellelemente des Mikroskops zu verändern, beispielsweise um durch Wahl der optimalen Beleuchtung die Bildqualität des gewählten Bildmodus zu optimieren.

Ein Bildmodus ist durch eine oder durch mehrere Einstellungen an der Kamera definiert, wie interne Verstärkung der Kamera, Belichtungszeit, Bildfolgerate, Bildformat, Bildkontrast, Auflösung (Anzahl der Pixel in x- und y-Richtung), Farbverteilung (Intensität der einzelnen Farben), Bildhelligkeit und Bildverarbeitungsmodus (z. B. "Binning" oder "Subsampling").

Informationen über die jeweiligen Mikroskopeinstellungen können auf verschiedene Weise erhalten werden: Vorteilhaft ist, wenn das entsprechende Einstellelement einen Sensor aufweist, der ein entsprechendes elektrisches Signal liefert. Solche Sensoren können zu dem erfindungsgemäßen Zweck in bekannter Weise an ein Einstellelement angebracht werden. Häufig sind solche Sensoren, insbesondere bei motorisch betriebenen Mikroskopen, bereits vorhanden. In einer weiteren vorteilhaften Ausgestaltung lassen sich die Informationen über Motoren erhalten, die mit den Einstellelementen verbunden sind. Solche Motoren sind bei motorbetriebenen Mikroskopeinstellungen (beispielsweise Verstellung der Tischpositionen) bereits vorhanden und können für den erfindungsgemäßen Zweck verwendet werden. Es ist sinnvoll, die Einstellwerte der entsprechenden Mikroskopeinstellungen über eine elektronische Schnittstelle nach außen zu übertragen.

Entsprechend ist es sinnvoll, wenn die Kamera des Mikroskopsystems mit einer externen Schnittstelle versehen ist, über die die typischen, oben erwähnten Einstellungen veränderbar sind, die einen Bildmodus der Kamera festlegen.

Es ist vorteilhaft, wenn das mit der Kamera in Wirkverbindung stehende Einstellelement des Mikroskops über eine logische Einheit mit der Kamera verbunden ist. In der logischen Einheit sind zweckmäßigerweise bestimmte Bildmodi vordefiniert. Je nach gewähltem Bildmodus werden beispielsweise über die externe Schnittstelle der Kamera die entsprechenden Einstellungen durch die logische Einheit vorgenommen. Die Wahl des Bildmodus hängt wiederum von den Mikroskopeinstellungen, die verändert werden, ab. So können für langsame Veränderungen von Mikroskopeinstellungen (beispielsweise Mikroskoptischbewegungen, Veränderungen an Blenden und/oder Beleuchtung), schnelle Veränderungen solcher Einstellungen und Phasen ohne Veränderungen dieser Einstellungen jeweils unterschiedliche Bildmodi ausgelöst werden. Andererseits kann beispielsweise eine Bewegung des Mikroskoptisches in x-y-Ebene einen anderen Bildmodus nach sich ziehen als eine Bewegung in z-Richtung allein (zur Fokussierung). Die Wahl des jeweils gewünschten Bildmodus in Abhängigkeit von den vorgenommenen Veränderungen der Mikroskopeinstellungen wird vordefiniert und in der logischen Einheit derart abgelegt, dass diese die notwendigen Auswertungen und Einstellungen automatisch vornimmt.

Die Wahl einer solchen logischen Einheit ist auch für die alternative oder zusätzliche Variante der Erfindung von Vorteil, bei der abhängig vom vorhandenen Bildmodus der Kamera ein Einstellelement des Mikroskops veränderbar ist. So kann die logische Einheit entweder den jeweiligen Bildmodus von der Kamera abrufen oder den Bildmodus - wie oben beschrieben - vorgeben. Abhängig vom jeweiligen Bildmodus kann es zweckmäßig sein, Mikroskopeinstellungen zu verändern bzw. weitere Veränderungen der Mikroskopeinstellungen vorzunehmen. Hierzu ist die logische Einheit beispielsweise über eine Schnittstelle mit den entsprechenden Einstellelementen des Mikroskops verbunden. Beispielsweise kann es zweckmäßig sein, bei bestimmten Bildmodi der Kamera die Beleuchtungsstärke der Objektebene zu erhöhen. Hierzu kann dann die logische Einheit den Regler der Mikroskoplampe ansteuern. Auf diese Weise kann insbesondere durch eine bidirektionale Wirkverbindung eine optimale Bildqualität erzielt werden.

In einer besonders bevorzugten und benutzerfreundlichen Ausgestaltung enthält das Mikroskopsystem eine mit der Kamera verbundene Darstellungseinheit, die für jeden eingestellten Bildmodus der Kamera dem Betrachter ein einheitliches Bildformat darbietet. Dieses Bildformat definiert sich beispielsweise bezüglich Bildgröße und/oder Bildhelligkeit und/oder Bildfarbwahl. Somit wird unabhängig von dem tatsächlichen Datenformat der Kamera ein Bild möglichst konstanten Formats an einen Bildschirmbetrachter geliefert. Werden bei bisher bekannten Kameras Wechsel zwischen verschiedenen Bildmodi vorgenommen, so ändert sich in der Regel auch das Datenformat der Kamera. Beispielsweise wird beim "Binning" oder "Subsampling" ein entsprechend verkleinertes Bild geliefert, wobei beim "Binning" die Helligkeit pro Pixel noch erhöht ist. Durch die vorgeschlagene Ausgestaltung bleibt in solchen Fällen das Bildformat auch bei Wechsel der Bildmodi im wesentlichen unverändert.

Es ist zweckmäßig, wenn die erwähnte Darstellungseinheit einen Grafikprozessor und einen Monitor aufweist. Der Grafikprozessor kann jedoch im gerätetechnischen Sinne auch Bestandteil der Kamera sein; die Darstellungseinheit besteht dann im wesentlichen aus einem Monitor. Der Grafikprozessor übernimmt die Rechenarbeit, um das tatsächliche Ausleseformat des Kamerasensors in ein Bild möglichst konstanter Größe, Helligkeit und Farbe zu wandeln. Die hierzu notwendigen Skalierungsfaktoren kann der Grafikprozessor entweder direkt von der logischen Einheit oder indirekt über die Kamera erhalten.

Ein erfindungsgemäßes Verfahren zur Bildgebung mit einem Mikroskop, das mindestens eine verstellbare Mikroskopeinstellung aufweist, und mit einer Kamera, die in vorgebbaren Bildmodi betreibbar ist, ist dadurch gekennzeichnet, dass abhängig von einer vorgenommenen Änderung der Mikroskopeinstellung automatisch ein bestimmter Bildmodus der Kamera eingestellt wird. Dieses Verfahren ist mit dem erfindungsgemäßen Mikroskopsystem ausführbar, insofern wird auf die obige Beschreibung des erfindungsgemäßen Mikroskopsystems verwiesen.

Es sei an dieser Stelle angemerkt, dass grundsätzlich die Information über eine Veränderung des Bildinhaltes (etwa "Bewegung" oder "Stillstand") auch dem Bild selbst entnommen werden kann, ohne eine Kopplung an das Mikroskop vorzunehmen. Aufgrund des hohen Rechenaufwands bei der zugehörigen Bildverarbeitung sind in diesem Fall unvorteilhafte verzögerte Reaktionen des Systems die häufige Folge.

Bei dem erfindungsgemäßen Verfahren ist es sinnvoll, wenn Informationen über eine Mikroskopeinstellung von einem Sensor und/oder einem Motor abgenommen werden, wobei der Sensor die jeweilige Mikroskopeinstellung detektiert und der Motor die jeweilige Mikroskopeinstellung vornimmt. Weiterhin ist die Zuführung von Informationen über eine Mikroskopeinstellung an eine logische Einheit zweckmäßig, die die Kamera ansteuert, um einen Bildmodus auszuwählen. Zu den genannten Ausgestaltungen und deren Vorteile wird auf das im Zusammenhang mit dem erfindungsgemäßen Mikroskopsystem Ausgeführte verwiesen.

Es ist weiterhin zweckmäßig, wenn ein oder mehrere Bildmodi für Bewegtbilder und für Standbilder vorgegeben werden. Wie bereits angesprochen, kann es zweckmäßig sein, für Bewegtbilder je nach Bewegungsgeschwindigkeit zwei Modi zu vergeben, während für Standbilder nur mit einem Bildmodus gearbeitet wird. Im Falle des Stillstandes wird beispielsweise nach einer typischen Zeit in einen Standbildmodus geschaltet, der mit einer für Dokumentationszwecke geeigneten maximalen Auflösung arbeitet. Beispielsweise kann für das Navigieren über das zu untersuchende Objekt ein erster Bewegtbildmodus definiert werden, der mit kurzen Belichtungszeiten und hoher Verstärkung arbeitet. Ein zweiter Bewegtbildmodus kann schließlich für langsamere Bewegungsänderungen als Zwischenlösung (etwa mit 10 Bildern pro Sekunde) definiert werden, um etwa bei einem langsamen Abtasten Bilder hoher Qualität zu erhalten.

Wie bereits oben ausgeführt, ist es besonders bevorzugt, wenn die durch die Kamera in den verschiedenen Bildmodi gelieferten Bilder in einem einheitlichen Format dargestellt werden. Um Wiederholungen zu vermeiden sei hier wiederum auf das im Zusammenhang mit dem erfindungsgemäßen Mikroskopsystem Ausgeführte verwiesen.

Zur Definition eines Bildmodus werden anwendungstechnisch sinnvolle Kameraeinstellungen kombiniert. In Einzelfällen kann auch auf von der Kamera vorgegebene Bildmodi zurückgegriffen werden. Ein Bildmodus kann statisch, also unveränderbar vorgegeben sein. Es kann jedoch auch zweckmäßig sein, wenn ein Bildmodus in veränderbarer Weise vorgegeben wird, indem etwa bestimmte kameratechnische Einstellungen bei einem Bildmodus durch den Benutzer individuell variiert werden können. Die Änderungen können anschließend gespeichert werden. Andererseits ist es auch möglich, bei einer Veränderung eines Bildmodus (z. B. Erhöhung der Helligkeit) entsprechende Änderungen der anderen vorgegebenen Bildmodi automatisch mit vorzunehmen.

Die Erfindung betrifft weiterhin ein Computerprogramm zur Umsetzung des erfindungsgemäßen Bildgebungsverfahrens. Das Computerprogramm umfasst Programmcodemittel, um alle Schritte eines vorstehend beschriebenen Verfahrens auszuführen. Das Computerprogramm zur Wahl eines bestimmten Bildmodus in Abhängigkeit von den vorgenommenen Mikroskopeinstellungen ist zweckmäßigerweise in der genannten logischen Einheit abgelegt oder wird dort zumindest ausgeführt. Das die Umwandlung der verschiedenen Ausleseformate der Kamera in einheitliche (Monitor-)Bildformate übernehmende Computerprogramm ist zweckmäßigerweise Bestandteil des genannten Grafikprozessors.

Das erfindungsgemäße Computerprogrammprodukt ist auf einem computerlesbaren Datenträger gespeichert. Als geeignete Datenträger kommen EEPROMs und Flashmemories, aber auch CD-ROMs, Disketten sowie Festplatten in Betracht. Auch das Herunterladen des Computerprogramms über interne (Intranet) oder öffentliche (Internet) Netze ist möglich.

Es versteht sich, dass die vorstehend genannten und die nachstehend in den Ausführungsbeispielen noch zu erläuternden Merkmale nicht nur in der jeweils angegebenen Kombination sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der nachfolgenden Beschreibung und der beiliegenden Zeichnung. Die Erfindung und ihre Vorteile werden nunmehr anhand von Ausführungsbeispielen unter Bezugnahme auf die Zeichnung ausführlich beschrieben.
- Figur 1: zeigt in schematischer Darstellung eine Ausführungsform eines erfindungsgemäßen Mikroskopsystems und
- Figur 2: zeigt in schematischer Darstellung eine weitere Ausführungsform eines erfindungsgemäßen Mikroskopsystems.

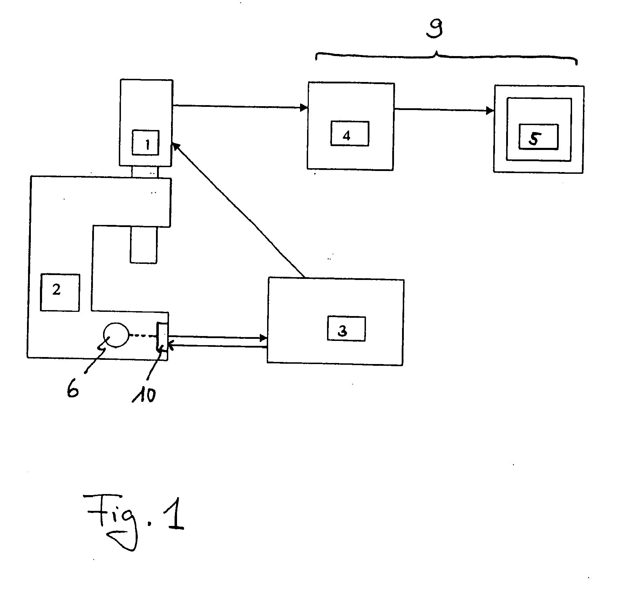

Eine Ausführungsform eines erfindungsgemäßen Mikroskopsystems ist in Figur 1 schematisch dargestellt. Das Mikroskop ist mit 2 bezeichnet. Für die Erfindung eignen sich sämtliche bekannte Mikroskope, an die zur Bildaufnahme eine Kamera angeschlossen werden kann. Die Kamera ist in Figur 1 mit 1 bezeichnet. Da derartige Videomikroskopsysteme an sich bekannt sind, erübrigt sich an dieser Stelle eine detaillierte Beschreibung.

Erfindungsgemäß ist eine logische Einheit 3 vorgesehen, die Informationen über vorgenommene Mikroskopeinstellungen vom Mikroskop 2 erhält und dementsprechend den Bildmodus der Kamera 1 einstellt. Weiterhin dargestellt ist eine Darstellungseinheit 9, in diesem Ausführungsbeispiel bestehend aus einem Grafikprozessor 4 und einem Monitor 5.

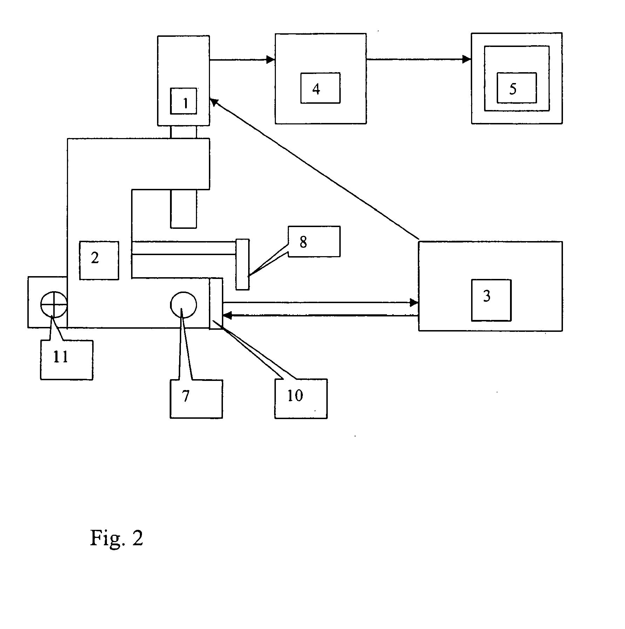

Aus Gründen der Übersichtlichkeit ist in Figur 1 ein einziges Einstellelement 6 dargestellt, das mit einer Schnittstelle 10 innerhalb des Mikroskops 2 verbunden ist. Durch Betätigen des Einstellelements 6 (zum Beispiel Verschieben eines Mikroskoptisches (nicht dargestellt) in z-Richtung) werden entsprechende Signale an die Schnittstelle 10 übermittelt, die von dort an die logische Einheit 3 weitergeleitet werden. Aufgrund dieser Signale kann die logische Einheit 3 laufend den aktuellen Wert bzw. die Veränderung der jeweiligen Mikroskopeinstellung ermitteln, insbesondere kann die logische Einheit 3 auch die Änderungsgeschwindigkeit dieser Mikroskopeinstellung feststellen. Eine detalliertere Ansicht der Kopplung von Einstellungselementen 6 am Mikroskop 2 mit der logischen Einheit 3 zeigt Figur 2.

Die Informationen über die Veränderung des Einstellelements 6 werden in der logischen Einheit 3 verarbeitet, und der hierzu passende Bildmodus wird ausgesucht. Die Wahl des Bildmodus hängt insbesondere davon ab, welche Einstellelemente 6 am Mikroskop 2 betätigt werden und mit welcher Geschwindigkeit die Veränderung der jeweiligen Einstellungen erfolgt. Denkbar und sinnvoll sind beispielsweise drei Bildmodi, von denen ein Modus für Standbilder, die beiden anderen Modi für Bewegtbilder eingesetzt werden. Bewegungen in der Mikroskoptischebene (xy-Ebene) können, wie auch Veränderungen an Blenden und Beleuchtung, einen der Bewegtbildmodi initiieren. Hierbei ist es sinnvoll, abhängig von der Veränderungsgeschwindigkeit jeweils einen anderen Bewegtbildmodus auszulösen. Es kann auch sinnvoll sein, für eine Bewegung in z-Richtung (Fokussierung) einen weiteren Bildmodus zu definieren.

Abhängig von den Informationen über Veränderungen der Mikroskopeinstellungen nimmt demgemäß die logische Einheit 3 die Auswahl eines Bildmodus vor. Hierzu ist zweckmäßigerweise in der logischen Einheit 3 jeder Bildmodus anhand der kameratechnischen Einstellungen definiert. Zu diesen gehören Belichtungszeit, Verstärkung, Binning/Subsampling, Verschlusssteuerung und andere mehr. Durch die Einstellung dieser kameratechnischen Parameter wird der entsprechende Bildmodus an der Kamera 1 definiert. Für eine Navigation mit hoher Geschwindigkeit werden kurze Belichtungszeiten bei einer hohen Verstärkung gewählt.

### Beispiel mit dem Sensor MT9T01

| Bildmodi | Ausgelöst durch | Auflösung | Bild-rate (fps) | Belichtungszeit | Beleuchtungsstärke |
|---|---|---|---|---|---|
| 1"Standbild" | Ruhe | 2048x1536 | 10 | 5 ms | normal |
| 2"Bewegtbild1" | Bewegung z-Trieb,Blende | 1024x768 | 27 | 5 ms | normal |
| 3"Bewegtbild2" | Tischbewegung x-y | 682x512 | 60 | 1 ms | stark |

Aus der Tabelle geht hervor, dass jeder Bildmodus der Kamera auch eine Einstellung der Beleuchtungsstärke beim Mikroskop 2 enthält. Wird folglich abhängig von den vorgenommenen Veränderungen einer Mikroskopeinstellung ein bestimmter Bildmodus gewählt, so kann dieser seinerseits eine Einstellung, hier die Beleuchtungsstärke am Mikroskop verändern. Die "starke" Beleuchtung ist beim Bildmodus 3 wegen der sehr kurzen Belichtungszeit der Kamera 1 sinnvoll, bei den anderen Bildmodi ist eine solche starke Beleuchtung aus wärmetechnischen Gründen nicht zweckmäßig.

Zur Einstellung des Bildmodus weist die Kamera 1 zweckmäßigerweise eine entsprechende Schnittstelle zur logischen Einheit 3 auf. Weiterhin ist sinnvoll, die beschriebene Zuordnung eines Bildmodus in Abhängigkeit von den Mikroskopeinstellungen durch ein Computerprogramm vornehmen zu lassen.

Je nach eingestelltem Bildmodus liefert die Kamera 1 nun Mikroskopbilder im kameratypischen Format. Wie bereits erwähnt, unterscheiden sich die Kameraformate bei einer Änderung des Bildmodus in der Regel hinsichtlich Bildgröße, Bildhelligkeit und/oder Bildfarbe. Um ein komfortables Betrachten der erhaltenen Bilder zu ermöglichen, ist eine Darstellungseinheit 9 vorgesehen, die die von der Kamera gelieferten Bilder in einheitliche Formate wandelt. Hierzu ist in diesem Ausführungsbeispiel ein Bildprozessor oder Grafikprozessor (Grafikkarte) 4 vorgesehen, die die Kamerabilder entsprechend nachbearbeitet. Das nachbearbeitete Bild kann dann auf einem Monitor 5 angezeigt werden. Es sei in diesem Zusammenhang nochmals darauf hingewiesen, dass die Grafikkarte 4 auch Bestandteil der Kamera 1 sein kann. Beispielsweise ist es auch möglich, bei entsprechender Ausstattung der Kamera 1 die Nachbearbeitung der Bilder hinsichtlich eines einheitlichen Formats direkt in der Kamera 1 vorzunehmen.

Figur 2 zeigt in detaillierterer Ansicht als Figur 1 Einstellelemente 7, 8 und 11 eines Mikroskops 2 und deren Verbindung zur logischen Einheit 3. Gleiche Elemente wie in Figur 1 sind in Figur 2 mit denselben Bezugszeichen versehen. Aufbau und Funktionsweise des in Figur 2 dargestellten Mikroskopsystems entsprechen denen des in Figur 1 dargestellten Systems. Um Wiederholungen zu vermeiden, sei im folgenden lediglich auf die Unterschiede zur Figur 1 näher eingegangen. Dargestellt sind der Fokustrieb 7 mit Sensor und der Tischtrieb 8 mit Sensor, wobei durch den Fokustrieb eine Verstellung des Mikroskoptisches in z-Richtung erfolgt, durch den Tischtrieb in der horizontalen y-x-Ebene. Die Lampe 11 steht für die Beleuchtungseinrichtung des Mikroskops 2. Die Beleuchtungsstärke der Lampe 11 bestimmt die Helligkeit des Bildes in der Objektebene und auf der Kamera 1. Innerhalb des Mikroskops 2 sind die Sensoren und Aktuatoren (Motoren) des Mikroskops elektrisch und logisch verknüpft (je nach Modell bzw. Ausbauzustand - nicht zeichnerisch dargestellt).

In diesem Ausführungsbeispiel weist das Mikroskop eine elektrische Schnittstelle 10 auf, über die die Positionen bzw. deren Veränderungen der einzelnen Mikroskopeinstellungen, hier Fokus- und Tischtrieb, nach außen übertragen werden können. Die logische Einheit 3 empfängt über diese Schnittstelle 10 die Signale über die Veränderungen an den Sensoren des Fokustriebs 7 und des Tischtriebs 8 und entscheidet über den geeigneten Bildmodus. Hierzu gibt die logische Einheit 3 die entsprechenden Informationen, wie bereits im Zusammenhang mit Figur 1 geschildert, an die Kamera 1. Je nach gewähltem Bildmodus kann es sinnvoll sein, bestimmte Einstellungen am Mikroskop zu verändern. In diesem Ausführungsbeispiel kann die logische Einheit 3 hierzu je nach gewähltem Bildmodus über die Schnittstelle 10 des Mikroskops 2 die Mikroskoplampe 11 ansteuern. Bei den in Zusammenhang mit Figur 1 beispielhaft genannten Bildmodi würde die logische Einheit 3 bei Wahl der Bildmodi "Standbild" und "Bewegtbild 1" keine Änderung der Beleuchtungsstärke der Lampe 11 veranlassen, während sie bei Wahl des Bildmodus "Bewegtbild 2" eine höhere Beleuchtungsstärke an der Mikroskoplampe 11 vornehmen würde.

Die bidirektionale Verbindung von logischer Einheit 3 und Mikroskop 2 eignet sich somit besonders dazu, bei einem gewählten Bildmodus die Bildqualität weiter zu erhöhen.

Die Erfindung ermöglicht eine komfortable und vollständig automatisierbare, insbesondere computergestützte Videomikroskopie, die in Abhängigkeit der Art und Weise der mikroskopischen Untersuchung den jeweils optimalen Bildmodus ermittelt.

### Bezugszeichenliste

- 1: Kamera
- 2: Mikroskop
- 3: logische Einheit
- 4: Grafikprozessor
- 5: Monitor
- 6: Einstellelement
- 7: Fokustrieb mit Sensor
- 8: Tischtrieb mit Sensor
- 9: Darstellungseinheit
- 10: Schnittstelle
- 11: Lampe

## Patentansprüche

1. Mikroskopsystem mit einem Mikroskop (2), das ein oder mehrere Einstellelemente (6, 7, 8, 11) zur Veränderung mindestens einer Mikroskopeinstellung aufweist, und mit einer Kamera (1) zur Aufnahme eines Mikroskopbildes, die in vorgebbaren Bildmodi betreibbar ist,
**dadurch gekennzeichnet, dass**
mindestens eines der Einstellelemente (6, 7, 8, 11) des Mikroskops (2) mit der Kamera (1) derart in Wirkverbindung steht, dass abhängig von einer Veränderung eines Einstellelements (6, 7, 8, 11) ein bestimmter Bildmodus der Kamera (1) einstellbar und/oder abhängig vom vorhandenen Bildmodus ein Einstellelement (11) des Mikroskops (2) veränderbar ist.

2. Mikroskopsystem nach Anspruch 1, **dadurch gekennzeichnet, dass** ein mit der Kamera (1) in Wirkverbindung stehendes Einstellelement (7, 8) einen Sensor und/oder einen Motor aufweist, über den Informationen über die jeweilige Mikroskopeinstellung nach außen übertragbar sind.

3. Mikroskopsystem nach Anspruch 1 oder 2, **dadurch gekennzeichnet, dass** ein mit der Kamera (1) in Wirkverbindung stehendes Einstellelement (6, 7, 8, 11) des Mikroskops (2) über eine logische Einheit (3) mit der Kamera (1) verbunden ist.

4. Mikroskopsystem nach Anspruch 3, **dadurch gekennzeichnet, dass** in der logischen Einheit (3) Ansteuerarten für die Kamera (1) für mindestens zwei Bildmodi definiert sind, wobei die Wahl einer Ansteuerart von an die logische Einheit (3) übermittelten Informationen über die jeweilige Mikroskopeinstellung abhängt.

5. Mikroskopsystem nach Anspruch 3 oder 4, **dadurch gekennzeichnet, dass** in der logischen Einheit (3) Ansteuerarten für das Mikroskop (2) definiert sind, wobei die Wahl einer Ansteuerart von dem jeweiligen Bildmodus abhängt.

6. Mikroskopsystem nach Anspruch 4 und 5, **dadurch gekennzeichnet, dass** die in der logischen Einheit (3) festgelegten Bildmodi auch Ansteuerarten für das Mikroskop (2), insbesondere für die Beleuchtungseinstellungen des Mikroskops (2) beeinhalten.

7. Mikroskopsystem nach einem der Ansprüche 1 bis 6, **gekennzeichnet durch** eine mit der Kamera (1) verbundene Darstellungseinheit (9), die für jeden eingestellten Bildmodus der Kamera (1) dem Betrachter ein einheitliches Bildformat darbietet.

8. Mikroskopsystem nach Anspruch 7, **dadurch gekennzeichnet, dass** das Bildformat durch Bildgröße und/oder Bildhelligkeit und/oder Bildfarbwahl definiert ist.

9. Mikroskopsystem nach Anspruch 7 oder 8, **dadurch gekennzeichnet, dass** die Darstellungseinheit (9) einen Graphikprozessor (4) und einen Monitor (5) aufweist.

10. Mikroskopsystem nach einem der Ansprüche 1 bis 9, **dadurch gekennzeichnet, dass** eine Mikroskopeinstellung eine solche umfaßt, die ausgewählt ist aus der Gruppe von Position eines Mikroskoptisches, Position eines Mikroskopobjektives, Wahl eines Mikroskopobjektives, Stellung einer oder mehrerer Blenden im Beleuchtungs- und/oder Abbildungsstrahlengang und Stärke der Beleuchtung eines Objekts.

11. Mikroskopsystem nach einem der Ansprüche 1 bis 10, **dadurch gekennzeichnet, dass** ein Bildmodus der Kamera (1) durch eine oder mehrere Einstellungen definiert ist, die umfassen: Verstärkung der Kamera, Belichtungszeit, Bildfolgerate, Bildformat, Bildkontrast, Auflösung, Farbverteilung, Bildhelligkeit und Bildverarbeitungsmodus.

12. Verfahren zur Bildgebung mit einem Mikroskop (2), das mindestens eine verstellbare Mikroskopeinstellung aufweist, und mit einer Kamera (1), die in vorgebbaren Bildmodi betreibbar ist,
**dadurch gekennzeichnet, dass**
abhängig von einer vorgenommenen Änderung einer Mikroskopeinstellung an der Kamera (1) automatisch ein bestimmter Bildmodus der Kamera (1) eingestellt und/oder abhängig vom vorhandenen Bildmodus eine Mikroskopeinstellung verändert wird.

13. Verfahren nach Anspruch 12, **dadurch gekennzeichnet, dass** Informationen über eine Mikroskopeinstellung von einem Sensor und/oder von einem Motor abgenommen werden, der die Mikroskopeinstellung detektiert bzw. vornimmt.

14. Verfahren nach Anspruch 12 oder 13, **dadurch gekennzeichnet, dass** Informationen über eine Mikroskopeinstellung einer logischen Einheit (3) zugeführt werden, die die Kamera (1) ansteuert, um einen Bildmodus zu wählen.

15. Verfahren nach einem der Ansprüche 12 bis 14, **dadurch gekennzeichnet, dass** ein oder mehrere Bildmodi jeweils für bewegte Bilder und für Standbilder vorgegeben werden.

16. Verfahren nach einem der Ansprüche 12 bis 15, **dadurch gekennzeichnet, dass** die durch die Kamera (1) in verschiedenen Bildmodi gelieferten Bilder in einem einheitlichen Format dargestellt werden.

17. Verfahren nach einem der Ansprüche 12 bis 16, **dadurch gekennzeichnet, dass** bei Wahl eines bestimmten Bildmodus der Kamera (1) Beleuchtungseinstellungen des Mikroskops (2) verändert werden.

18. Verfahren nach einem der Ansprüche 12 bis 17, **dadurch gekennzeichnet, dass** als Mikroskopeinstellung die Position eines Mikroskoptisches, die Position eines Mikroskopobjektives, die Wahl eines Mikroskopobjektives, die Stellung einer oder mehrer Blenden im Beleuchtungs- und/oder Abbildungsstrahlengang und/oder die Stärke der Beleuchtung eines Objekts gewählt wird.

19. Verfahren nach einem der Ansprüche 12 bis 18, **dadurch gekennzeichnet, dass** ein Bildmodus der Kamera (1) durch eine oder mehrere Einstellungen definiert wird, die umfassen: Verstärkung der Kamera, Belichtungszeit, Bildfolgerate, Bildformat, Bildkontrast, Auflösung, Farbverteilung, Bildhelligkeit und Bildverarbeitungsmodus.

20. Verfahren nach einem der Ansprüche 12 bis 19, **dadurch gekennzeichnet, dass** ein Bildmodus unveränderbar vorgegeben wird.

21. Verfahren nach einem der Ansprüche 12 bis 19, **dadurch gekennzeichnet, dass** ein Bildmodus in veränderbarer Weise vorgegeben wird.

22. Verfahren nach Anspruch 21, **dadurch gekennzeichnet, dass** bei einer Veränderung eines Bildmodus entsprechende Änderungen anderer Bildmodi vorgenommen werden.

23. Computerprogramm mit Programmcodemitteln, um alle Schritte eines Verfahrens nach einem der Ansprüche 12 bis 22 durchzuführen, wenn das Computerprogramm auf einem Computer oder einer entsprechenden Recheneinheit, insbesondere der logischen Einheit (3) gemäß Anspruch 3 und/oder dem Grafikprozessor (4) gemäß Anspruch 9, ausgeführt wird.

24. Computerprogrammprodukt mit Programmcodemitteln, die auf einem computerlesbaren Datenträger gespeichert sind, um ein Verfahren nach einem der Ansprüche 12 bis 22 durchzuführen, wenn das Computerprogramm auf einem Computer oder einer entsprechenden Recheneinheit, insbesondere der logischen Einheit (3) gemäß Anspruch 3 und/oder dem Grafikprozessor (4) gemäß Anspruch 9, ausgeführt wird.
